Europäisches Patentamt

European Patent Office

Office européen des brevets

(19)

(11) Veröffentlichungsnummer: **0 033 843**
**B1**

(12) # EUROPÄISCHE PATENTSCHRIFT

(45) Veröffentlichungstag der Patentschrift:
09.02.83

(21) Anmeldenummer: 81100138.7

(22) Anmeldetag: 10.01.81

(51) Int. Cl.³: **C 01 B 33/20,** C 01 B 33/193,
C 08 K 3/22, C 08 K 3/34,
C 08 L 83/04

(54) **Cerhaltige Fällungskieselsäure, Verfahren zu deren Herstellung, sowie zu Elastomeren härtbare Massen, die die cerhaltige Fällungskieselsäure enthalten.**

(30) Priorität: 12.02.80 DE 3005137

(43) Veröffentlichungstag der Anmeldung:
19.08.81 Patentblatt 81/33

(45) Bekanntmachung des Hinweises auf die Patenterteilung:
09.02.83 Patentblatt 83/6

(84) Benannte Vertragsstaaten:
BE DE FR GB IT NL

(56) Entgegenhaltungen:
DE-A-2 617 434
DE-A-2 628 975
DE-A-2 716 225
DE-A-2 727 611
DE-A-2 924 915
DE-B-1 230 562
DE-B-1 242 866
JP-B-51 034 868

(73) Patentinhaber: Degussa Aktiengesellschaft,
Weissfrauenstrasse 9, D-6000 Frankfurt am Main 1 (DE)

(72) Erfinder: Nauroth, Peter, Germanusstrasse 8,
D-5047 Wesseling (DE)
Erfinder: Kuhlmann, Robert, Paul-Keller-Strasse 24,
D-5042 Erftstadt (DE)
Erfinder: Türk, Günter, Dr., Liesingstrasse 3,
D-6450 Hanau 9 (DE)
Erfinder: Bode, Rudolf, An der Heppenmauer 15,
D-6482 Bad Orb (DE)
Erfinder: Reisert, Arthur, Alzenauer Strasse 27a,
D-8756 Kahl (DE)

**0 033 843**

### Cerhaltige Fällungskieselsäure, Verfahren zu deren Herstellung, sowie zu Elastomeren härtbare Massen, die die cerhaltige Fällungskieselsäure enthalten

Es ist bekannt, Fällungskieselsäuren in Kombination mit 0,3 – 3,0 Gew.-% Carbonsäuren bzw. deren Derivate zur Hitzestabilisierung von Silikonölen einzusetzen (japanische Patentschrift Nr. 34 868/76). Diese Fällungskieselsäuren sind jedoch in Diorganopolysiloxan-Elastomeren, wie heißhärtendem Silikonkautschuk, nicht wirksam.

Die DE-B-1 242 866 beschreibt die Verwendung einer der Zusammensetzung des Monazitsandes entsprechenden Oxidmischung von Seltenen Erden zur Wärmestabilisierung in Formmassen auf der Basis von Diorganopolysiloxan-Elastomeren. Die Nachteile dieses Oxidgemisches sind die intensive Verfärbung der Elastomermassen, die hohe Zugabemenge von 16 – 40 Gewichtsteilen auf 100 Gewichtsteile Elastomer, die fehlende Feinteiligkeit (ca. 50 Mikron) und die schwierige Dispergierbarkeit der Oxide der Seltenen Erden, die Oberflächenstippigkeit bei aus den Elastomerermassen hergestellten Folien hervorruft.

In der DE-B-1 230 562 wird die Verwendung hydrophobierter Fällungskieselsäure als Alterungsschutzmittel beschrieben.

Die DE-A-2 617 434 beschreibt den Einsatz einer Mischung aus pyrogen hergestelltem Titandioxid und Cer(III)oxid als Wärmestabilisierungsmittel für Diorganopolysiloxan-Elastomere.

In der DE-A-2 727 611 wird eine flammgeschützte Silikonkautschukmasse, die 0,1 – 3 Gewichtsteile Cer(IV)-Hydroxid enthält, beschrieben.

Gegenstand der Erfindung ist eine cerhaltige Fällungskieselsäure, die durch folgende physikalisch-chemischen Stoffdaten gekennzeichnet ist:

| | |
|---|---|
| BET-Oberfläche nach DIN 66 131, $m^2/g$ | $140 \pm 40$ |
| Trocknungsverlust nach DIN 55 921, Gew.-% | $2,0 – 4,0$ |
| Glühverlust nach DIN 55 921, Gew.-% | $2,5 – 12,5$ |
| pH-Wert nach DIN 53 200 | $3,0 – 7,0$ |
| Leitfähigkeit in 4%iger wäßriger Dispersion bei 20° C, $\mu S$ | $< 500$ |
| Stampfdichte nach DIN 53 194, g/l | $80 \pm 40$ |
| $CeO_2$-Gehalt, bezogen auf die 2 Stunden bei 105° C getrocknete Substanz, Gew.-% | $0,3 – 50$ |
| Siebrückstand nach Mocker $> 45$ $\mu m$ (DIN 53 580), Gew.-% | $< 0,2$ |

In einer bevorzugten Ausführungsform kann die erfindungsgemäße cerhaltige Fällungskieselsäure die folgenden physikalisch-chemischen Kenndaten aufweisen:

| | |
|---|---|
| BET-Oberfläche nach DIN 66 131, $m^2/g$ | $140 \pm 40$ |
| Trocknungsverlust nach DIN 55 921, Gew.-% | $2,0 – 4,0$ |
| Glühverlust nach DIN 55 921, Gew.-% | $4,0 – 7,0$ |
| pH-Wert nach DIN 53 200 | $3,5 – 7,0$ |
| Leitfähigkeit in 4%iger wäßriger Dispersion bei 20° C, $\mu S$ | $< 500$ |
| Stampfdichte nach DIN 53 194, g/l | $75 \pm 25$ |
| $CeO_2$-Gehalt, bezogen auf die 2 Stunden bei 105° C getrocknete Substanz, Gew.-% | $10 – 20$ |
| Siebrückstand nach Mocker $> 45$ $\mu m$ (DIN 53 580), Gew.-% | $< 0,2$ |

Ein weiterer Gegenstand der Erfindung ist ein Verfahren zur Herstellung der cerhaltigen Fällungskieselsäure mit den folgenden physikalisch-chemischen Kenndaten:

| | |
|---|---|
| BET-Oberfläche nach DIN 66 131, $m^2/g$ | $140 \pm 40$ |
| Trocknungsverlust nach DIN 55 921, Gew.-% | $2,0 – 4,0$ |
| Glühverlust nach DIN 55 921, Gew.-% | $2,5 – 12,5$ |
| pH-Wert nach DIN 53 200 | $3,0 – 7,0$ |
| Leitfähigkeit in 4%iger wäßriger Dispersion bei 20° C, $\mu S$ | $< 500$ |
| Stampfdichte nach DIN 53 194, g/l | $80 \pm 40$ |
| $CeO_2$-Gehalt, bezogen auf die 2 Stunden bei 105° C getrocknete Substanz, Gew.-% | $0,3 – 50$ |
| Siebrückstand nach Mocker $> 45$ $\mu m$ (DIN 53 580), Gew.-% | $< 0,2$ |

welches dadurch gekennzeichnet ist, daß man zu einer wäßrigen Vorlage, bestehend aus Wasser, welches einen pH-Wert von 7 bis 9 aufweist, bei einer Temperatur über 50° C bis zum Siedepunkt der Reaktionsmischung unter Anwendung von Scherkräften und unter Konstanthaltung eines pH-Wertes von 7 bis 9 gleichzeitig Wasserglaslösung und Säure während eines Zeitraums von 80 bis 120 Minuten hinzugibt, wobei nach Abschluß der Fällung ein pH-Wert von 7 bis 9 in der Reaktionsmischung vorliegt, zu der so erhaltenen Fällungskieselsäure-Originalsuspension eine wäßrige Cer(IV)-Salzlösung

2

hinzugibt, die nunmehr saure Reaktionsmischung auf einen pH-Wert von 6 bis 8 einstellt, das feste Reaktionsprodukt abfiltriert, den so erhaltenen Cer enthaltenden Fällungskieselsäurefilterkuchen mit Wasser auswäscht, trocknet und vermahlt.

In einer bevorzugten Ausführungsform der Erfindung kann die wäßrige Vorlage einen pH-Wert von 7 bis 8,5 aufweisen. Die Einstellung des pH-Wertes der wäßrigen Vorlage, die im neutralen Zustand, d. h., bei einem pH-Wert von 7, aus Wasser allein bestehen kann, kann durch Zusatz von z. B. Wasserglas-Lösung, NaOH oder $Na_2CO_3$ erfolgen.

So kann man insbesondere die pH-Werteinstellung der wäßrigen Vorlage mit einer Wasserglaslösung, welche ein Molverhältnis $SiO_2 : Na_2O = 1 : 3,46$ und einen Gehalt von 26,8 Gew.-% $SiO_2$ und 8,0 Gew.-% $Na_2O$ aufweist, durchführen.

Als Säure kann man z. B. Schwefelsäure, Salpetersäure, Phosphorsäure, Kohlendioxid, Ameisensäure, oder Essigsäure einsetzen.

In einer bevorzugten Ausführungsform des Verfahrens kann man Schwefelsäure in einer Konzentration von 50 bis 96 Gew.-% verwenden.

In einer bevorzugten Ausführungsform kann man den Cer enthaltenden Fällungskieselsäurefilterkuchen durch Anwendung von Scherkräften verflüssigen, sprühtrocknen und vermahlen. Zum Vermahlen der sprühgetrockneten Fällungskieselsäure kann man vorzugsweise eine Stiftmühle verwenden.

Zum Verflüssigen des cerhaltigen Fällungskieselsäurefilterkuchens kann man intensive Scherkräfte ausübende Dispergatoren, Homogenisatoren oder ähnliche Vorrichtungen verwenden. Eine bevorzugte Ausführungsform dieser Vorrichtung ist in der DE-C-2 447 613 beschrieben. Bei einem Gehalt an Cerdioxid von über 20 Gew.-% kann es notwendig sein, dem Fällungskieselsäurefilterkuchen zusätzlich Wasser hinzuzufügen.

Als Cer(IV)-Salzlösung kann bevorzugt eine bei 20° C gesättigte $Ce(SO_4)_2 \cdot 4H_2O$-Lösung, die 100 g/l $Ce(SO_4)_2 \cdot 4H_2O$ enthält, kontinuierlich unter Rühren, wodurch sichergestellt wird, daß eine homogene Verteilung der Cer(IV)-Verbindung in der Fällungskieselsäuresuspension erfolgt, zugegeben werden. Eine derartige Cersulfatlösung weist bei 20° C einen pH-Wert von 0,65 auf.

Die daher stark saure, cerhaltige Fällungskieselsäuresuspension kann durch Zusatz einer 15 – 20 Gew.-%igen wäßrigen Natronlauge auf einen pH-Wert von 6 bis 8 gebracht werden. Die Zugabe der Natronlaugelösung erfolgt dabei kontinuierlich unter Rühren.

Ein weiterer Gegenstand der Erfindung sind zu Elastomeren härtbare Massen auf der Basis von Diorganopolysiloxanen, welche die erfindungsgemäße cerhaltige Fällungskieselsäure enthalten.

In einer bevorzugten Ausführungsform der Erfindung können die zu Elastomeren härtbaren Massen 0,1 bis 1,0 Gew.-% der cerhaltigen Fällungskieselsäure enthalten.

Überraschenderweise läßt sich die erfindungsgemäße cerhaltige Fällungskieselsäure in zu Elastomeren härtbaren Massen sehr gut dispergieren.

Die erfindungsgemäßen zu Elastomeren härtbaren Massen weisen eine überraschend hohe Wärmestabilität auf. Aufgrund der geringen Menge an cerhaltiger Fällungskieselsäure weisen die erfindungsgemäßen zu Elastomeren härtbare Massen nahezu keine Gelbfärbung und keine Stippen an der Oberfläche auf.

Die erfindungsgemäßen, zu Elastomeren härtbare Massen weisen überraschenderweise selbstverlöschende Eigenschaften auf. Sie können deshalb vorteilhaft als Kabelisoliermaterial eingesetzt werden.

Beispiel 1

In einem Fällgefäß mit Gummierung werden 100 Liter Wasser vorgelegt, mit Wasserglas auf einen pH-Wert von 8,5 eingestellt und auf eine Temperatur von 83° C erhitzt. Im Verlauf von 80 Minuten werden anschließend 19,0 l Wasserglaslösung (handelsübliches Produkt mit einem Molverhältnis $SiO_2 : Na_2O = 1 : 3,40$ und einem Gehalt von 26,8 Gew.-% $SiO_2$ und 8,0 Gew.-% $Na_2O$) und 1,78 l konzentrierter Schwefelsäure (96 Gew.-%) zur Vorlage gegeben.. Die Schwefelsäure wird über einen EKATO-Scheibenrührer der Vorlage zugeführt. Die EKATO-Turbine wirkt dabei nicht nur als Rührer, sondern auch als Scherorgan auf die sich bildende Fällungskieselsäure.

Während der genannten Fällzeit werden pH-Wert und Temperatur konstant gehalten. Nach Abschluß der Fällung weist die Reaktionsmischung einen pH-Wert von 8,5 auf. Der Feststoffgehalt der Suspension liegt bei Fällungsende bei 58 g/l. Unmittelbar nach beendeter Fällung werden 27,4 Liter einer $Ce(SO_4)_2 \cdot 4H_2O$-Lösung mit 100 g/l (20° C) im Laufe von 15 Minuten bei laufender EKATO-Turbine der Fällungskieselsäuresuspension zugesetzt. Dabei stellt sich ein pH-Wert von 1,7 ein. Im Anschluß an die Zugabe der Cer(IV)-Salzlösung werden bei laufender Turbine 4,5 Liter einer 20%igen Natronlaugelösung zur Suspension gefügt, wobei sich ein pH-Wert von 7 einstellt. Die cerhaltige Fällungskieselsäure wird mit Hilfe einer Laborfilterpresse aus der Fällungssuspension abgetrennt und mit Wasser elektrolytarm gewaschen. Der Filterpressenteig wird anschließend unter Anwendung von Scherkräften jedoch ohne weitere Zusätze von Wasser oder Säure verflüssigt und mittels eines Technikumsprühtrockners getrocknet. Nach der Vermahlung mittels einer Laborstiftmühle werden

3

8,2 kg einer cerhaltigen Fällungskieselsäure mit hellgelber Farbe erhalten, die die nachfolgend aufgeführten physikalisch-chemischen Kenndaten besitzt:

| | |
|---|---|
| BET-Oberfläche nach DIN 66 131, m²/g | 136 |
| Trocknungsverlust nach DIN 55 921, Gew.-% | 2,3 |
| Glühverlust nach DIN 55 921, Gew.-% | 5,3 |
| pH-Wert nach DIN 53 200 | 4,2 |
| Leitfähigkeit in 4%iger wäßriger Dispersion bei 20° C, µS | 190 |
| Stampfdichte nach DIN 53 194, g/l | 68 |
| CeO₂-Gehalt, bezogen auf die 2 Stunden bei 105° C getrocknete Substanz, Gew.-% | 13,6 |
| Siebrückstand nach Mocker >45 µm (DIN 53 580), Gew.-% | 0,1 |

## Beispiel 2

Die Herstellung einer Fällungskieselsäure-Originalsuspension erfolgt gemäß Beispiel 1. Im Anschluß an die Fällung werden 30,2 Liter einer Ce(SO₄)₂ · 4H₂O-Lösung mit 100 g/l bei 20° C im Verlauf von 22 Minuten bei laufender EKATO-Turbine und 66 Liter einer 15%igen Natronlaugelösung zur Suspension gefügt, wobei sich ein pH-Wert von 7 einstellt. Die weitere Aufarbeitung der cerhaltigen Fällungskieselsäure — wie Filtration, Auswaschen, Teigverflüssigung, Sprühtrocknung und Vermahlung — erfolgt gemäß Beispiel 1.

Es werden 8,4 kg einer cerhaltigen Fällungskieselsäure mit hellgelber Farbe erhalten, die die nachfolgend aufgeführten physikalisch-chemischen Kenndaten aufweist:

| | |
|---|---|
| BET-Oberfläche nach DIN 66 131, m²/g | 130 |
| Trocknungsverlust nach DIN 55 921, Gew.-% | 2,8 |
| Glühverlust nach DIN 55 921, Gew.-% | 5,7 |
| pH-Wert nach DIN 53 200 | 4,0 |
| Leitfähigkeit in 4%iger wäßriger Dispersion bei 20° C, µS | 180 |
| Stampfdichte nach DIN 53 194, g/l | 61 |
| CeO₂-Gehalt, bezogen auf die 2 Stunden bei 105° C getrocknete Substanz, Gew.-% | 15,0 |
| Siebrückstand nach Mocker >45 µm (DIN 53 580), Gew.-% | 0,1 |

## Beispiel 3

Die Herstellung einer Original-Fällungskieselsäuresuspension erfolgt gemäß Beispiel 1. Sie wird mit 1,25 l einer Cer(IV)-Sulfatlösung mit einer Konzentration von 100 g/l bei 20° C versetzt und anschließend mit 15%iger Natronlauge auf einen pH-Wert von 7 eingestellt. Die weitere Aufarbeitung der Fällungskieselsäure erfolgt gemäß Beispiel 1. Es werden 6,9 kg einer cerhaltigen Fällungskieselsäure erhalten, die folgende Kenndaten besitzt:

| | |
|---|---|
| BET-Oberfläche nach DIN 66 131, m²/g | 140 |
| Trocknungsverlust nach DIN 55 921, Gew.-% | 2,4 |
| Glühverlust nach DIN 55 921, Gew.-% | 3,1 |
| pH-Wert nach DIN 53 200 | 6,6 |
| Leitfähigkeit in 4%iger wäßriger Dispersion bei 20° C, µS | 390 |
| Stampfdichte nach DIN 53 194, g/l | 49 |
| CeO₂-Gehalt, bezogen auf die 2 Stunden bei 105° C getrockneter Substanz, Gew.-% | 0,74 |
| Siebrückstand nach Mocker >45 µm (DIN 53 580), Gew.-% | 0,1 |

## Beispiel 4

Es wird eine Fällungskieselsäure-Originalsuspension gemäß Beispiel 1 hergestellt. Daran anschließend werden 210 Liter Ce(SO₄)₂ · 4H₂O-Lösung mit einer Konzentration von 100 g/l bei 20° C der Fällungskieselsäuresuspension zugesetzt. Schließlich wird die Suspension mit 15%iger Natronlauge auf einen pH-Wert von 7 eingestellt. Die weitere Aufarbeitung der cerhaltigen Fällungskieselsäure erfolgt gemäß Beispiel 1. Dabei wird jedoch zur Verflüssigung des Filterkuchenteiges pro kg Filterkuchenteig 0,8 kg Wasser hinzugegeben. Es werden 12,6 kg einer cerhaltigen Kieselsäure erhalten, die folgende Kenndaten besitzt:

| | |
|---|---|
| BET-Oberfläche nach DIN 66 131, m²/g | 105 |
| Trocknungsverlust nach DIN 55 921, Gew.-% | 2,2 |
| Glühverlust nach DIN 55 921, Gew.-% | 11,8 |
| pH-Wert nach DIN 53 200 | 3,2 |
| Leitfähigkeit in 4%iger wäßriger Dispersion bei 20° C, μS | 330 |
| Stampfdichte nach DIN 53 194, g/l | 94 |
| CeO$_2$-Gehalt, bezogen auf die 2 Stunden bei 105° C getrocknete Substanz, Gew.-% | 49,3 |
| Siebrückstand nach Mocker >45 μm (DIN 53 580), Gew.-% | 0,1 |

Zur Prüfung der Wirksamkeit der erfindungsgemäßen cerhaltigen Kieselsäure als Wärmestabilisierungsmittel in zu Elastomeren härtbaren Massen auf Basis von Diorganopolysiloxanen werden die cerhaltigen Fällungskieselsäuren gemäß Beispiel 1 und 2 im Vergleich zu pyrogenem Titandioxid P 25® (Degussa), reinem Ceroxid und einem in Silikonpolymeren vordispergierten Cerdioxid (50%ig) sowie im Vergleich zur nicht-stabilisierten Silikongummi-Mischung in einer Testrezeptur einem Hitzealterungstest unterzogen.

Als heißvulkanisierende Organosiloxane können solche verwendet werden, der organische Substituenten aus Methyl-Äthyl-, Phenyl-, Trifluormethylphenyl [F$_3$CC$_6$H$_4$−)] oder Triäthylsilmethylenresten [(CH$_3$)$_3$SiCH$_2$−] bestehen, z. B. Dimethyl-, Diäthyl-, Phenylmethyl-, Phenyläthyl-, Äthylmethyl-, Trimethylsilmethylenmethyl-, Trimethylsilmethylenäthyl-, Trifluormethylphenylmethyl- oder Trifluormethylphenyläthylsiloxane bzw. Mischpolymerisate solcher Verbindungen. Außerdem können die Polymerisate begrenzte Mengen von Diphenylsiloxan-, Bis-trimethylsilmethylensiloxan-, Bis-trifluormethylphenylsiloxaneinheiten sowie auch Siloxane mit Einheiten der Formel RSiO$_{1,5}$ und R$_3$SiO$_{0,5}$ enthalten, wobei R eine der obigen Reste darstellt.

Es wird folgende Rezeptur benutzt:

100 Teile     Silopren VS (Bayer)
40 Teile      Aerosil 200 V® (Degussa)
1,4 Teile     Sileprenvernetzer Cl 50 (Bayer)
1−3 Teile     Wärmestabilisator

Die heißhärtenden Silikonkautschukmischungen werden auf bekannte Weise 7 Minuten bei 130° C in der Vulkanisationspresse und 6 Stunden bei 200° C im Umluftschrank ausvulkanisiert und deren mechanische Daten bestimmt.

Zur Stabilitätsprüfung wird der Silikongummi in einem Umluftschrank bei 300° C gelagert. In bestimmten Zeitabständen werden seine mechanischen Daten, wie Shore-A-Härte, Zugfestigkeit, Bruchdehnung und Rückprallelastizität, untersucht.

Die Ergebnisse dieser Untersuchungen sind in Tabelle 1 zusammengefaßt und werden wie folgt erläutert:

— Die Hitzestabilisierung der vulkanisierten, zu Elastomeren härtbaren Massen durch die erfindungsgemäßen Kieselsäuren übertrifft deutlich diejenige durch reines Cerdioxid. Das vordispergierte CeO$_2$ verhält sich zwar vorteilhafter als das direkt eingesetzte CeO$_2$, zeigt sich aber der erfindungsgemäßen Kieselsäure noch weit unterlegen.

— Im Vergleich zum pyrogenen Titandioxid besteht auf gleicher Gewichtsbasis, bezogen auf die eingesetzte cerhaltige Fällungskieselsäure, gleiche Wirksamkeit.

  Vergleicht man die Hitzestabilisierungswirkung jedoch auf der Basis der wirksamen Substanzen (CeO$_2$-Gehalt mit TiO$_2$-Gehalt), so erweisen sich die erfindungsgemäßen cerhaltigen Kieselsäuren mit 13−15 Gew.-% CeO$_2$ um das 6−7fache überlegen.

— Deutliche Überlegenheit gegenüber den Stoffen des Standes der Technik zeigen die erfindungsgemäßen Kieselsäuren nach Beispiel 1 und 2 auch im Hinblick auf die optischen Eigenschaften der mit diesen Substanzen gefüllten Vulkanisate. Während Titandioxid eine weiße Opazität und Cerdioxid, bzw. Cerdioxidbatch eine grauweiße Verfärbung erzeugen, zeigen die erfindungsgemäßen vulkanisierten zu Elastomeren härtbare Massen nur eine leichte Gelbfärbung.

Die Prüfung der selbstverlöschenden Eigenschaften von Silikongummi erfolgt an einer Basismischung mit folgender Zusammensetzung:

100 Teile     Silopren VS®
40 Teile      Aerosil 200 V®
1,4 Teile     Sileprenvernetzer Cl 50®
0,14 Teile    Hexachloroplatinsäure (25%ig)

Silopren VS® ist ein Vinyl-Methyl-Polysiloxan-Elastomer. Der Sileprenvernetzer C150® ist Bis-2,4-Dichlorbenzoylperoxid in 50%iger Silikonöldispersion.

Diese Mischung wird zunächst 7 Minuten lang bei 130° C in der Presse und anschließend 6 Stunden lang bei 200° C im Umluftschrank behandelt.

Als flammhemmende Additive werden der Mischung

pyrogenes Titandioxid,
reines Cerdioxid, sowie
die erfindungsgemäße cerhaltige Kieselsäure nach Beispiel 1 und 2
in Mengen von 3,5 Teilen auf 100 Teile Basismischung zugesetzt.

Die selbstverlöschenden Eigenschaften werden in Anlehnung an die Vorschrift UL-94 bestimmt. Dazu werden Teststreifen aus Silikongummi mit den Abmessungen $130 \times 13 \times 2$ mm hergestellt. Die Streifen werden vertikal aufgehängt und 15 Sekunden mit einem Bunsenbrenner beflammt. Das untere Ende des Teststreifens wird dazu von dem oberen Teil der inneren Flamme berührt (innere Flammenhöhe ca. 20 mm, äußere Flammenhöhe 40 mm). Nach Entfernung der Flamme wird die Zeit bis zum Erlöschen der brennenden Silikongummiprobe gemessen. Nach dem Erkalten der Probe wird zum zweiten Male angebrannt und nochmals die Zeit bis zum Erlöschen bestimmt. Eine genaue Beschreibung des Verfahrens findet sich in der DE-A-2 750 706 (TORAY SILICONE Co.).

Die Ergebnisse sind in der Tabelle 2 zusammengefaßt. Die Diskussion der Versuchsergebnisse mit einem Zusatz von 0,14 Teilen Hexachloroplatinsäure (Tabelle 2) zeigt:

— HTV-Silikonkautschuk ohne Platinkatalysator brennt vollkommen ab.
— Eine Zugabe von Hexachloroplatinsäure (0,14 Teile) bewirkt bereits ein Verlöschen.
— Der Einsatz von 3,5 Teilen von pyrogenem Titandioxid vermindert die Brenndauer.
— Reines Cerdioxid zeigt sich praktisch im Vergleich zur platinhaltigen Mischung unwirksam, die erfindungsgemäße cerhaltige Fällungskieselsäure entsprechend einem $CeO_2$-Gehalt von 0,5 Teilen $CeO_2$ ist bereits wirksam. Eine gute flammhemmende Wirkung wird bei einer Dosierung von 10 Teilen der erfindungsgemäßen Kieselsäure entsprechend 1,5 Teilen $CeO_2$ erreicht.
— Synergistische Effekte von Mischungen aus reinem Cerdioxid bzw. cerhaltiger Fällungskieselsäure gemäß Beispiel 2 einerseits und pyrogenem Titandioxid andererseits ergeben sich unter den gewählten Bedingungen nicht und im Hinblick auf die mechanischen Eigenschaften des HTV-Silikonkautschukvulkanisates verhält sich das erfindungsgemäße Produkt am günstigsten.

Tabelle 1

Teil A

Prüfung von Hitzestabilisatoren in heißhärtendem Silikonkautschuk

| Vorbehandlung der Prüfkörper bei 300° | Art und Zusammensetzung des Hitzestabilisators | | | | | |
|---|---|---|---|---|---|---|
| | ohne Zusatz | Cerdioxid (rein) | | Cerdioxidbatch (50 G-%) | | |
| | | 1,5 G-% | 3,0 G-% | 1,0 G-% | 1,5 G-% | 3,0 G-% |
| SHORE-A-Härte | | | | | | |
| ohne Alterung | 52 | — | — | — | — | — |
| 6 bei 200°C | 62 | 70 | 69 | | 70 | 69 |
| 2 Tage bei 300°C | 91 | 94 | 69 | | 91 | 69 |
| 4 Tage bei 300°C | versprödet | versprödet | 74 | | versprödet | 72 |
| 8 Tage bei 300°C | | | 79 | | | 75 |
| 12 Tage bei 300°C | | | 95 | | | 80 |
| 16 Tage bei 300°C | | | — | | | — |
| 24 Tage bei 300°C | | | versprödet | | | 86 |
| 36 Tage bei 300°C | | | | | | versprödet |

6

Fortsetzung

| Vorbehandlung der Prüfkörper bei 300° | Art und Zusammensetzung des Hitzestabilisators | | | | | |
|---|---|---|---|---|---|---|
| | ohne Zusatz | Cerdioxid (rein) | | Cerdioxidbatch (50 G-%) | | |
| | | 1,5 G-% | 3,0 G-% | 1,0 G-% | 1,5 G-% | 3,0 G-% |
| **Bruchdehnung (%)** | | | | | | |
| ohne Alterung | 290 | — | — | | — | — |
| 6 h bei 200°C | 240 | 200 | 210 | | 230 | 230 |
| 2 Tage bei 300°C | versprödet | versprödet | 220 | | 10 | 230 |
| 4 Tage bei 300°C | | | 150 | | versprödet | 200 |
| 8 Tage bei 300°C | | | 75 | | | 100 |
| 12 Tage bei 300°C | | | — | | | — |
| 16 Tage bei 300°C | | | — | | | — |
| 24 Tage bei 300°C | | | — | | | — |
| **Zugfestigkeit (Nmm$^2$)** | | | | | | |
| ohne Alterung | 10,3 | — | — | | — | — |
| 6 h bei 200°C | 9,7 | 8,8 | 8,4 | | 9,9 | 9,2 |
| 2 Tage bei 300°C | versprödet | versprödet | 4,9 | | 1,7 | 5,1 |
| 4 Tage bei 300°C | | | 5,2 | | versprödet | 6,1 |
| 8 Tage bei 300°C | | | 4,4 | | | 4,8 |
| 12 Tage bei 300°C | | | — | | | — |
| 16 Tage bei 300°C | | | — | | | — |
| 24 Tage bei 300°C | | | — | | | — |
| **Rückprallelastizität (%)** | | | | | | |
| ohne Alterung | — | — | — | | — | — |
| 6 h bei 200°C | 55 | 53 | 54 | | 54 | 53 |
| 2 Tage bei 300°C | versprödet | 58 | 47 | | 61 | 45 |
| 4 Tage bei 300°C | | versprödet | 52 | | versprödet | 49 |
| 8 Tage bei 300°C | | | 56 | | | 53 |
| 12 Tage bei 300°C | | | 63 | | | 57 |
| 16 Tage bei 300°C | | | versprödet | | | — |
| 24 Tage bei 300°C | | | | | | 58 |
| 36 Tage bei 300°C | | | | | | versprödet |

Tabelle 1

Teil B

| Vorbehandlung der Prüf-körper bei 300° | Art und Zusatzmenge der Hitzestabilisatoren | | | | | |
|---|---|---|---|---|---|---|
| | Pyrogenes $TiO_2$ | | Cerhaltige Kiesel-säure gem. Beisp. 1 | | Cerhaltige Kiesel-säure gemäß Beisp. 2 | |
| | 0,5 G-% | 1,0 G-% | 1,0 G-% | 2,0 G-% | 1,5 G-% | 3,0 G-% |
| SHORE-A-Härte | | | | | | |
| ohne Alterung | 66 | 63 | 52 | 53 | — | — |
| 6 h bei 200°C | 72 | 70 | 62 | 62 | 70 | 70 |
| 2 Tage bei 300°C | 66 | 62 | 54 | 54 | 73 | 69 |
| 4 Tage bei 300°C | 68 | 65 | 59 | 59 | 76 | 72 |
| 8 Tage bei 300°C | 74 | 67 | 65 | 63 | 79 | 75 |
| 12 Tage bei 300°C | versprödet | 72 | 70 | 67 | 82 | 79 |
| 16 Tage bei 300°C | | 74 | 76 | 71 | — | — |
| 24 Tage bei 300°C | | — | 86 | 79 | 85 | 83 |
| 36 Tage bei 300°C | | — | 90 | 84 | 88 | 87 |
| Bruchdehnung (%) | | | | | | |
| ohne Alterung | 400 | 420 | 340 | 320 | — | — |
| 6 h bei 200°C | 300 | 340 | 240 | 280 | 210 | 250 |
| 2 Tage bei 300°C | 300 | 390 | 320 | 320 | 260 | 260 |
| 4 Tage bei 300°C | — | 480 | 280 | 270 | 220 | 200 |
| 8 Tage bei 300°C | — | — | 230 | 210 | 150 | 150 |
| 12 Tage bei 300°C | — | — | 160 | 200 | — | — |
| 16 Tage bei 300°C | — | — | 90 | 150 | — | — |
| 24 Tage bei 300°C | — | — | 70 | 100 | — | — |

Fortsetzung

| Vorbehandlung der Prüf-körper bei 300° | Art und Zusatzmenge der Hitzestabilisatoren | | | | | |
|---|---|---|---|---|---|---|
| | Pyrogenes $TiO_2$ | | Cerhaltige Kiesel-säure gem. Beisp. 1 | | Cerhaltige Kiesel-säure gemäß Beisp. 2 | |
| | 0,5 G-% | 1,0 G-% | 1,0 G-% | 2,0 G-% | 1,5 G-% | 3,0 G-% |
| Zugfestigkeit ($Nmm^2$) | | | | | | |
| ohne Alterung | 9,1 | 9,4 | 8,3 | 8,5 | – | – |
| 6 h bei 200°C | 9,1 | 9,6 | 6,8. | 9,2 | 10,0 | 10,1 |
| 2 Tage bei 300°C | 4,6 | 5,5 | 5,0 | 5,5 | 6,5 | 6,5 |
| 4 Tage bei 300°C | – | – | 5,7 | 6,3 | 7,3 | 6,5 |
| 8 Tage bei 300°C | – | – | 5,9 | 6,2 | 5,4 | 6,0 |
| 12 Tage bei 300°C | – | – | 5,0 | 6,5 | – | – |
| 16 Tage bei 300°C | – | – | 4,9 | 5,8 | – | – |
| 24 Tage bei 300°C | – | – | 5,7 | 6,5 | – | – |
| Rückprallelastizität (%) | | | | | | |
| ohne Alterung | – | – | 41 | 42 | – | – |
| 6 h bei 200°C | – | – | 53 | 54 | 53 | 54 |
| 2 Tage bei 300°C | – | – | 32 | 32 | 50 | 46 |
| 8 Tage bei 300°C | – | – | 40 | 37 | 55 | 51 |
| 12 Tage bei 300°C | – | – | 45 | 41 | 56 | 53 |
| 16 Tage bei 300°C | – | – | 53 | 48 | 57 | 56 |
| 24 Tage bei 300°C | – | – | 60 | 52 | – | – |
| 36 Tage bei 300°C | – | – | – | – | 56 | 53 |

# 0 033 843

Tabelle 2

Prüfung von flammhemmenden Additiven in HTV-Siliconkautschuk

| | | | | | | | | |
|---|---|---|---|---|---|---|---|---|
| Grundmischung[1]), Teile | 100[2]) | 100 | 100 | 100 | 100 | 100 | 100 | 100 |
| Titandioxid pyrogen, Teile | — | — | 3,5 | — | — | — | 3,5 | 3,5 |
| Cerdioxid (rein), Teile | — | — | — | 3,5 | — | — | 3,5 | — |
| Kieselsäure gemäß Beispiel 2, Teile | — | — | — | — | 3,5[3]) | 10[4]) | — | 3,5[3]) |
| **Selbstverlöschende Eigenschaften** | | | | | | | | |
| Brenndauer | | | | | | | | |
| (1. Abbrennen) Sekunden | brennt | 90 | 27 | 100 | 60 | 30 | 27 | 35 |
| (2. Abbrennen) Sekunden | ab | 1 | 12 | 17 | 8 | 0 | 6 | 3 |
| **Mechanische Eigenschaften** | | | | | | | | |
| Shore-A-Härte | 66 | 43 | 43 | 45 | 52 | 69 | 45 | 54 |
| Zugfestigkeit, N/mm$^2$ | 8,6 | 9,0 | 5,8 | 7,2 | 9,5 | 8,1 | 6,2 | 7,3 |
| Bruchdehnung, % | 210 | 260 | 240 | 250 | 230 | 150 | 240 | 200 |
| Wirksamkeit, N/mm$^2$ | 1,8 | 2,3 | 1,4 | 1,8 | 2,2 | 1,2 | 1,5 | 1,5 |

[1]) Bestehend aus: 100 Teilen Silopren VS,
  40 Teilen Aerosil 200 V,
  1,4 Teilen siloprenvernetzter Cl 50,
  0,14 Teilen Hexachlorplatinsäure (25%ig in Wasser).

[2]) Ohne Hexachlorplatinsäure.

[3]) Entsprechend nur etwa 0,5 Teilen Cerdioxid.

[4]) Entsprechend etwa 1,5 Teilen Cerdioxid.

## Patentansprüche

1. Cerhaltige Fällungskieselsäure, gekennzeichnet durch die folgenden physikalisch-chemischen Kenndaten:

| | |
|---|---|
| BET-Oberfläche nach DIN 66 131, m$^2$/g | 140±40 |
| Trocknungsverlust nach DIN 55 921, Gew.-% | 2,0—4,0 |
| Glühverlust nach DIN 55 921, Gew.-% | 2,5—12,5 |
| pH-Wert nach DIN 53 200 | 3,0—7,0 |
| Leitfähigkeit in 4%iger wäßriger Dispersion bei 20°C, μS | <500 |
| Stampfdichte nach DIN 53 194, g/l | 80±40 |
| CeO$_2$-Gehalt, bezogen auf die 2 Stunden bei 105°C getrocknete Substanz, Gew.-% | 0,3—50 |
| Siebrückstand nach Mocker >45 μm (DIN 53 580), Gew.-% | <0,2 |

2. Verfahren zur Herstellung der cerhaltigen Fällungskieselsäure mit den folgenden physikalisch-chemischen Kenndaten:

| | |
|---|---|
| BET-Oberfläche nach DIN 66 131, m$^2$/g | 140±40 |
| Trocknungsverlust nach DIN 55 921, Gew.-% | 2,0—4,0 |
| Glühverlust nach DIN 55 921, Gew.-% | 2,5—12,5 |

| | |
|---|---|
| pH-Wert nach DIN 53 200 | 3,0 — 7,0 |
| Leitfähigkeit in 4%iger wäßriger Dispersion bei 20° C, µS | < 500 |
| Stampfdichte nach DIN 53 194, g/l | 80 ± 40 |
| CeO$_2$-Gehalt, bezogen auf die 2 Stunden bei 105° C getrocknete Substanz, Gew.-% | 0,3 — 50 |
| Siebrückstand nach Mocker >45 µm (DIN 53 580), Gew.-% | < 0,2 |

dadurch gekennzeichnet, daß man zu einer wäßrigen Vorlage, bestehend aus Wasser, welches einen pH-Wert von 7 bis 9 aufweist, bei einer Temperatur über 50°C bis zum Siedepunkt der Reaktionsmischung unter Anwendung von Scherkräften und unter Konstanthalten eines pH-Wertes von 7 bis 9 gleichzeitig Wasserglaslösung und Säure während eines Zeitraumes von 80 bis 120 Minuten hinzugibt, wobei nach Abschluß der Fällung ein pH-Wert von 7 bis 9 in der Reaktionsmischung vorliegt, zu der so erhaltenen Fällungskieselsäure-Originalsuspension eine wäßrige Cer(IV)-Salzlösung hinzugibt, die nunmehr saure Reaktionsmischung auf einen pH-Wert von 6 bis 8 einstellt, das feste Reaktionsprodukt abfiltriert, den so erhaltenen Cer enthaltenden Fällungskieselsäurefilterkuchen mit Wasser auswäscht, trocknet und vermahlt.

3. Verfahren nach Anspruch 2, dadurch gekennzeichnet, daß man den Cer enthaltenden Fällungskieselsäurefilterkuchen unter Anwendung von Scherkräften verflüssigt, sprühtrocknet und vermahlt.

4. Verfahren nach Ansprüchen 2 oder 3, dadurch gekennzeichnet, daß man als Cer(IV)-Salzlösung eine bei 20° C gesättigte Cer(IV)-Sulfat · 4H$_2$O-Lösung verwendet.

5. Zu Elastomeren härtbare Massen auf der Basis von Diorganopolysiloxanen, enthaltend die cerhaltige Fällungskieselsäure gemäß Anspruch 1.

**Claims**

1 A cerium-containing precipitated silica, characterised by the following physico-chemical data:

| | |
|---|---|
| BET-surface according to DIN 66 131, m$^2$/g | 140 ± 40 |
| Drying loss according to DIN 55 921, % by weight | 2.0 — 4.0 |
| Ignition loss according to DIN 55 921, % by weight | 2.5 — 12.5 |
| pH-value according to DIN 53 200 | 3.0 — 7.0 |
| Conductivity of a 4% aqueous dispersion at 20° C, µS | < 500 |
| Tamped density according to DIN 53 194, g/l | 80 ± 40 |
| CeO$_2$-content, based on the substance dried for 2 hours at 105° C, % by weight | 0.3 — 50 |
| Mocker sieve residue >45 µm (DIN 53 580), % by weight | < 0.2 |

2. A process for the production of cerium-containing precipitated silica having the following physico-chemical data:

| | |
|---|---|
| BET-surface according to DIN 66 131, m$^2$/g | 140 ± 40 |
| Drying loss according to DIN 55 921, % by weight | 2.0 — 4.0 |
| Ignition loss according to DIN 55 921, % by weight | 2.5 — 12.5 |
| pH-value according to DIN 53 200 | 3.0 — 7.0 |
| Conductivity of a 4% aqueous dispersion at 20° C, µS | < 500 |
| Tamped density according to DIN 53 194, g/l | 80 ± 40 |
| CeO$_2$-content, based on the substance dried for 2 hours at 105° C, % by weight | 0.3 — 50 |
| Mocker sieve residue >45 µm (DIN 53 580), % by weight | < 0.2 |

characterised in that waterglass solution and acid are simultaneously added over a period of 80 to 120 minutes — during which shear forces are applied — to an aqueous medium consisting of water having a pH-value of from 7 to 9 at a temperature above 50° C to the boiling point of the reaction mixture and at a pH-value kept constant at pH 7 to 9, a pH-value of from 7 to 9 prevailing in the reaction mixture on completion of precipitation, after which an aqueous cerium(IV)salt solution is added to the original precipitated silica suspension thus obtained, the now acid reaction mixture is adjusted to a pH-value of from 6 to 8, the solid reaction product is filtered off, the cerium-containing precipitaded silica filter cake thus obtained is washed out with water, dried and ground.

3. A process as claimed in Claim 2, characterised in that the cerium-containing precipitated silica filter cake is liquefied, spray-dried and ground, shear forces being applied during the liquefaction step.

4. A process as claimed in Claim 2 or 3, characterised in that a cerium(IV)sulfate · 4H$_2$O-solution is used as the cerium(IV)salt solution.

5. Compositions hardenable to form elastomers based on diorganopolysiloxanes and containing the ceriumcontaining precipitated silica claimed in Claim 1.

**Revendications**

1. Acide silicique de précipitation contenant du cérium, caractérisé par les caractéristiques physicochimiques suivantes:

| | |
|---|---|
| Aire surfacique BET selon DIN 66 131, m²/g | 140 ± 40 |
| Perte au séchage selon DIN 55 921, %-poids | 2,4 – 4,0 |
| Perte au feu selon DIN 55 921, %-poids | 2,5 – 12,5 |
| pH selon DIN 53 200 | 3,0 – 7,0 |
| Conductibilité en dispersion aqueuse à 4% à 20° C, μS | < 500 |
| Masse volumique après tassement selon DIN 53 194, g/l | 80 ± 40 |
| Teneur en $CeO_2$ rapportée à la substance séchée pendant 2 heures à 105° C, %-poids | 0,3 – 50 |
| Refus au tamos selon Mocker supérieur à 45 microns (DIN 53 580), %-poids | < 0,2 |

2. Procédé de fabrication d'un acide silicique de précipitation contenant du cérium et présentant les caractéristiques physicochimiques suivantes: .

| | |
|---|---|
| Aire spéficique BET selon DIN 66 131, m²/g | 140 ± 40 |
| Perte au séchage selon DIN 55 921, %-poids | 2,0 – 4,0 |
| Perte au feu selon DIN 55 921, %-poids | 2,5 – 12,5 |
| pH selon DIN 53 200 | 3,0 – 7,0 |
| Conductibilité en dispersion aqueuse à 4% à 20° C, μS | < 500 |
| Masse volumique après tassement selon DIN 53 194, g/l | 80 ± 40 |
| Teneur en $CeO_2$ rapportée à la substance séchée pendant 2 heures à 105° C, %-poids | 0,3 – 50 |
| Refus au tamis selon Mocker supérieur à 45 microns (DIN 53 580), %-poids | < 0,2 |

caractérisé en ce que l'on ajoute, sur une période de 80 à 120 minutes, à une masse aqueuse composée d'eau présentant un pH de 7 à 9, à une température supérieure à 50°C et allant jusqu'au point d'ébullition du mélange de réaction, en utilisant des forces de cisaillement et en maintenant constant un pH de 7 à 9, simultanément une solution de verre soluble et un acide, ce qui donne après la fin de la précipitation un pH de 7 à 9 dans le mélange de réaction, que l'on ajoute à la suspension originale d'acide silicique de précipitation ainsi obtenue une solution aqueuse d'un sel de cérium (IV), que l'on ajuste le mélange de réaction maintenant acide à un pH de 6 à 8, que l'on extrait par filtration le mélange de réaction solide, que l'on lave à l'eau, que l'on sèche et que l'on broie le gâteau de filtration d'acide silicique de précipitation contenant du cérium ainsi obtenu.

3. Procédé selon la revendication 2, caractérisé en ce que l'on liquéfie, sèche par atomisation et broie le gâteau de filtration d'acide silicique de précipitation contenant du cérium en utilisant des forces de cisaillement.

4. Procédé selon les revendications 2 ou 3, caractérisé en ce que l'on utilise en tant que solution d'un sel de cérium (IV) une solution saturée à 20° C de sulfate de cérium (IV), $4H_2O$.

5. Masses durcissables en élastomères sur la base de diorganopolysiloxannes, contenant l'acide silicique de précipitation contenant du cérium selon la revendication 1.

12